# EUROPEAN PATENT SPECIFICATION

(11) **EP 4 524 461 B1**
(45) Date of publication and mention of the grant of the patent: **03.06.2026**
(21) Application number: 24787038.9
(22) Date of filing: 07.03.2024
(51) Int. Cl.: F21S 41/32, F21S 41/33, F21S 43/31, F21W 107/10, F21S 41/148, F21S 41/36, F21S 41/365, F21S 43/14, F21V 7/00, F21V 8/00, F21Y 115/10

(54) **LIGHT SOURCE COUPLING STURCTURE**
LICHTQUELLENKOPPLUNGSANORDNUNG
STRUCTURE DE COUPLAGE DE SOURCE DE LUMIÈRE

(30) Priority: 03.08.2023 CN 202310968811
(43) Date of publication of application: 19.03.2025
(73) Proprietor: Changzhou Xingyu Automotive Lighting Systems Co., Ltd., Changzhou, Jiangsu 213022 (CN)
(72) Inventor: XU, Yanxiu, Changzhou Jiangsu 213022 (CN); LIU, Yang, Changzhou Jiangsu 213022 (CN)
(74) Representative: Lorenz Seidler Gossel Part. mbB
(86) International application number: PCT/CN2024/080428
(87) International publication number: WO 2025/025598

(56) References cited:
- WO-A1-2023/109306
- CN-A- 108 800 052
- CN-A- 108 873 142
- CN-A- 112 268 261
- CN-A- 116 221 656
- CN-A- 116 697 296
- CN-U- 216 844 525
- CN-U- 218 626 573
- JP-A- 2019 067 521
- US-A1- 2006 274 546
- US-A1- 2006 285 347
- US-A1- 2007 268 713
- US-A1- 2022 390 080

## Description

### TECHNICAL FIELD

The present invention relates to the technical field of vehicle lights, and in particular, to a light source coupling structure.

### BACKGROUND

Currently, with the rapid development of the vehicle light industry, various styles of light fixtures have been developed. During the process of pursuing diversified styles of light fixtures, instability of production processes is a problem urgently to be resolved by vehicle light manufacturers. In the field of optical design, an aluminum-plated reflecting surface structure is a commonly used solution for optical design. However, due to the instability of an aluminum plating process, problems of inconsistent thickness of the aluminum-plated film and unclear boundaries of aluminum plating often bring difficulties to the production of vehicle lights. The aluminum plating process also increases design costs.

Generally, light emitted from a light-emitting diode (LED) conforms to a Lambertian distribution, in which the light intensity is the strongest in the middle and gradually decreases as the angle of light rays increases. Such a distribution is not suitable for light fixtures requiring uniform light emission. Therefore, how to evenly distribute light emitted from an LED needs to be studied.

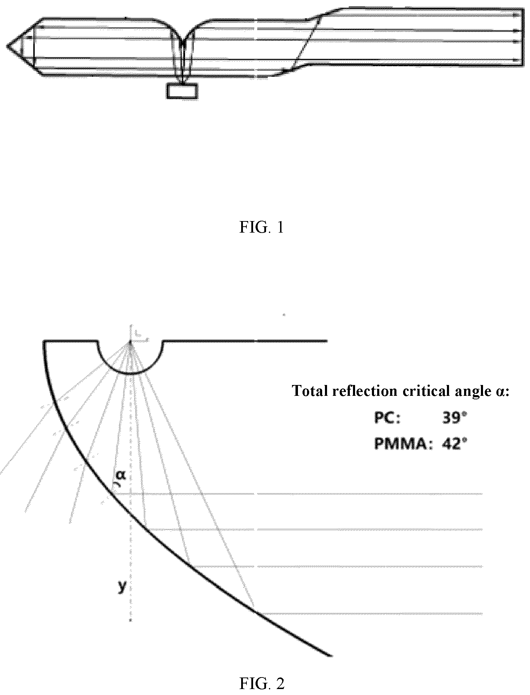

Some optical structures for this problem have been designed in the industry. For example, this problem is well solved by a structure shown in FIG. 1, which can allow light rays emitted from an LED to be converted into parallel light rays in a vertical plane and to be evenly spread in a transverse plane to form a 360-degree distribution. However, vehicle lights generally do not require a 360-degree distribution of light rays, and a 180-degree distribution is more appropriate. Therefore, other structures need to be additionally provided to optimize the light direction.

Currently, a non-aluminum-plating reflection solution is adopted. Materials commonly used in the non-aluminum-plating reflection solution include polycarbonate (PC) and poly(methyl methacrylate) (PMMA). The total reflection critical angle of PC is 39°, and the total reflection critical angle of PMMA is 42°. Referring to FIG. 2, most light rays on the left side of y-axis do not satisfy the total reflection condition because the angles between these light rays and the reflecting surface are less than the total reflection critical angle. These light rays will be transmitted through the material, resulting in a waste of the light rays.

JP 2019 067521 A discloses a light source coupling structure with an upper and a lower reflection portion having parabolic guide lines and a plurality of V-shaped reflective surfaces arranged circumferentially.

### SUMMARY

To resolve the technical problems in the prior art, the present invention provides a light source coupling structure.

To solve the above technical problems, the following technical solutions are employed in the present invention. A light source coupling structure according to the claim 1 of the present invention is provided.

According to the light source coupling structure of the present invention, incident light rays emitted from the light source are partially incident on the upper reflection portion and partially incident on the lower reflection portion. Because the guide line of the upper reflection portion and the guide line of the lower reflection portion are both parabolas, the light rays satisfying the total reflection condition can be converted into parallel light rays for output. Because the lower reflection portion is farther away from the light source, more light rays on the lower reflection portion satisfy the total reflection condition. Because the upper reflection portion is closer to the light source, angles between a large number of light rays and the upper reflection portion fail to reach a total reflection critical angle. **In** this case, the light rays are first incident on one surface of each of the plurality of first V-shaped reflective surfaces, and then totally reflected to an other surface of each of the plurality of first V-shaped reflective surfaces. Through two total internal reflections by each of the plurality of first V-shaped reflective surfaces, the light rays from a focal point that cannot be totally reflected are collimated and reflected in an approximately parallel manner. In addition, because the two surfaces of each of the plurality of first V-shaped reflective surfaces are both inclined, either surface of each of the plurality of first V-shaped reflective surfaces can allow the light rays to satisfy the total reflection condition. The light source coupling structure of the present invention can avoid the problem of unstable surface reflectivity caused by the aluminum plating process, and can convert light rays emitted from a point light source in all directions into parallel light rays as many as possible, thereby improving the luminous efficiency. In addition, the present light source coupling structure is different from conventional reflective surface shapes, and provides a clear and aesthetic visual effect.

Further, the upper reflection portion is configured as an arc shape along the circumferential direction of the upper reflection portion.

Further, the lower reflection portion is configured as an arc shape along a circumferential direction of the lower reflection portion.

The first surface is configured to totally reflect part of received light rays to the second surface so that reflected light rays are converted by the second surface into the parallel light rays for output, and the second surface is configured to totally reflect part of received light rays to the first surface so that reflected light rays are converted by the first surface into the parallel light rays for output.

Further, the lower reflection portion is a smooth curved surface.

Further, the lower reflection portion includes a plurality of second V-shaped reflective surfaces arranged in sequence along a circumferential direction of the lower reflection portion.

Further, an angle between two surfaces of each of the plurality of second V-shaped reflective surfaces ranges from 80° to 100°, and an angle between adjacent surfaces of every two adjacent ones of the plurality of second V-shaped reflective surfaces ranges from 80° to 100°.

Further, the upper reflection portion and the lower reflection portion are made of poly(methyl methacrylate) (PMMA) or polycarbonate (PC).

The present invention has the following advantages.
1. Through two total internal reflections by the first V-shaped reflective surface, the light rays from the focal point that cannot be totally reflected are collimated and reflected in an approximately parallel manner, and either surface of the first V-shaped reflective surface can allow the light rays to satisfy the total reflection condition. The light source coupling structure of the present invention can replace an aluminum-plated reflective surface to avoid the problem of unstable surface reflectivity caused by the aluminum plating process, and can convert light rays emitted from a point light source in all directions into parallel light rays, thereby improving the luminous efficiency. In addition, the present light source coupling structure is different from conventional reflective surface shapes, and provides a clear and aesthetic visual effect.
2. The upper reflection portion and the lower reflection portion are each arranged as an arc shape along a circumferential direction thereof. The arc-shaped reflective surfaces can reflect light rays to various angles, thereby increasing the illumination area of the light rays, and causing the output light rays to form a uniform semi-circular light pattern.

### BRIEF DESCRIPTION OF THE DRAWINGS

The present invention is further described below with reference to the accompanying drawings and embodiments.
FIG. 1 is a schematic diagram of a distribution of light rays evenly spread 360 degrees in a transverse plane in the prior art.
FIG. 2 is a schematic diagram illustrating total reflection critical angles in the prior art.
FIG. 3 is a three-dimensional view of a light source coupling structure according to the present invention.
FIG. 4 is a front view of a light source coupling structure according to the present invention.
FIG. 5 is a top view of a light source coupling structure according to the present invention.
FIG. 6 is a diagram illustrating the principle of an optical path of reflection of light rays by an upper reflection portion according to the present invention.
FIG. 7 is a top view illustrating a total reflection path of light rays reflected by an upper reflection portion according to the present invention.
FIG. 8 is a schematic diagram of the present invention in which the upper reflection portion is a smooth curved surface.
FIG. 9 is a schematic diagram of a second V-shaped reflective surface according to the present invention.

In the drawings: 1. incident surface; 2. upper reflection portion; 21. first V-shaped reflective surface; 211. first surface; 212. second surface; 3. lower reflection portion; 31. second V-shaped reflective surface; 4. light source.

### DETAILED DESCRIPTION OF THE EMBODIMENTS

The present invention will be further described in detail below with reference to the accompanying drawings. The drawings are simplified schematic diagrams, and only describe basic structures of the present invention in a schematic manner. Therefore, the drawings show only the parts related to the present invention.

The present invention discloses a light source coupling structure.

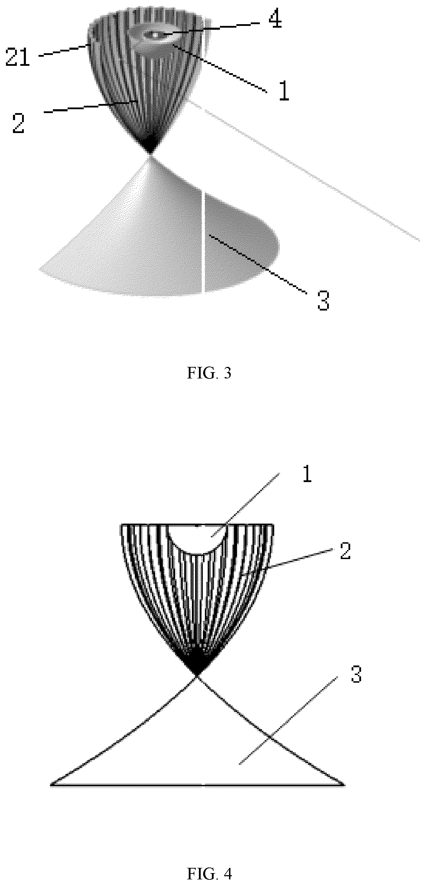

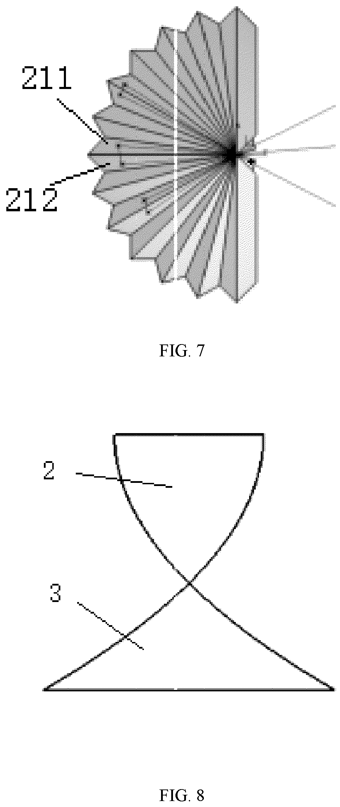

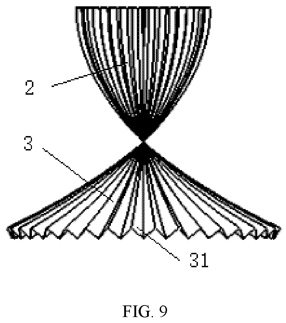

Referring to FIG. 3 to FIG. 9, a light source coupling structure includes an upper reflection portion 2 and a lower reflection portion 3. An incident cavity configured to accommodate a light source 4 is provided in the upper reflection portion 2. An incident surface 1 is provided in the incident cavity. The incident surface 1 is a semi-circular curved surface. The incident surface 1 is formed by rotating a curve by 180° about a vertical line at a point where the curve is connected to a bottom of the incident cavity. The incident surface 1 is located below the light source 4. The lower reflection portion 3 is arranged below the upper reflection portion 2 and is connected to the upper reflection portion 2. A guide line of the upper reflection portion 2 and a guide line of the lower reflection portion 3 are each a parabola, to convert received light rays into parallel light rays for output.

The upper reflection portion 2 is configured as an arc shape along a circumferential direction thereof. The lower reflection portion 3 is configured as an arc shape along a circumferential direction thereof. The arc-shaped reflective surfaces can reflect light rays to various angles, thereby increasing the illumination area of the light rays, and causing the output light rays to form a uniform semi-circular light pattern.

The upper reflection portion 2 includes a plurality of first V-shaped reflective surfaces 21 arranged in sequence along the circumferential direction thereof. The first V-shaped reflective surfaces 21 each include a first surface 211 and a second surface 212. An angle between the first surface 211 and the second surface 212 ranges from 80° to 100°, and an angle between adjacent surfaces of every two adjacent first V-shaped reflective surfaces 21 ranges from 80° to 100°. Because the first surface 211 and the second surface 212 are both inclined, angles between the first surface 211 or the second surface 212 and light rays exiting the incident surface 1 are less than a total reflection critical angle, so that the light rays can be totally reflected by the first surface 211 or the second surface 212. The first surface 211 is configured to totally reflect part of received light rays to the second surface 212 so that the reflected light rays are converted by the second surface 212 into parallel light rays for output. The second surface 212 is configured to totally reflect part of received light rays to the first surface 211 so that the reflected light rays are converted by the first surface 211 into parallel light rays for output. Because the lower reflection portion 3 is far away from the light source 4, requirements can be met by configuring the lower reflection portion 3 as a smooth curved surface.

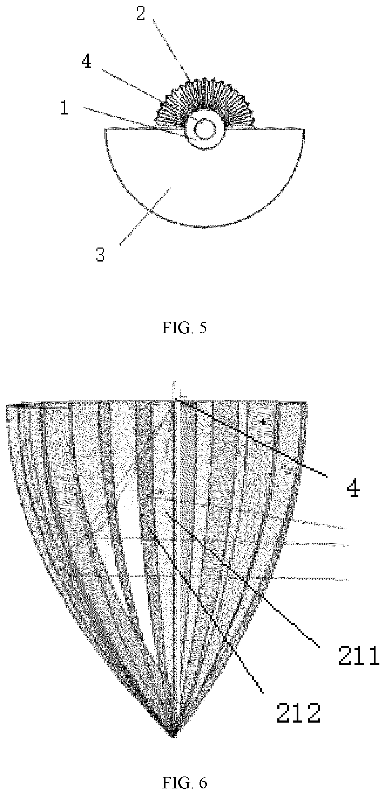

Referring to FIG. 5, light rays reflected by the upper reflection portion 2 and the lower reflection portion 3 are directed to the same direction, providing a better lighting effect and thus improving the brightness of a vehicle light using the light source coupling structure.

In another embodiment, the upper reflection portion 2 is a smooth curved surface.

In another embodiment, the lower reflection portion 3 includes a plurality of second V-shaped reflective surfaces arranged in sequence along the circumferential direction thereof. The second V-shaped reflective surfaces are of the same structure as the first V-shaped reflective surfaces 21. An angle between two surfaces of each of the second V-shaped reflective surfaces ranges from 80° to 100°, and an angle between adjacent surfaces of every two adjacent second V-shaped reflective surfaces ranges from 80° to 100°.

The upper reflection portion 2 and the lower reflection portion 3 are made of PMMA or PC.

The operating principle of the present invention is as follows. Incident light rays emitted from the light source 4 are partially incident on the upper reflection portion 2 and partially incident on the lower reflection portion 3. Because the guide lines of the upper reflection portion 2 and the lower reflection portion 3 are both parabolas, the light rays satisfying the total reflection condition can be converted into parallel light rays for output. Because the lower reflection portion 3 is farther away from the light source 4, more light rays on the lower reflection portion 3 satisfy the total reflection condition. Because the upper reflection portion 2 is closer to the light source 4, angles between a large number of light rays and the upper reflection portion 2 cannot reach the total reflection critical angle. In this case, through two total internal reflections by the first V-shaped reflective surface 21, the light rays from the focal point that cannot be totally reflected are collimated and reflected in an approximately parallel manner, and either surface of the first V-shaped reflective surface 21 can cause the light rays to satisfy the total reflection condition. The light source coupling structure of the present invention can avoid the problem of unstable surface reflectivity caused by the aluminum plating process, and can convert light rays emitted from the point light source 4 in all directions into parallel light rays, thereby improving the luminous efficiency. The arc-shaped reflective surfaces can reflect light rays to various angles, thereby increasing the illumination area of the light rays, and causing the output light rays to form a uniform semi-circular light pattern. In addition, the present light source coupling structure is different from conventional reflective surface shapes, and provides a clear and aesthetic visual effect.

In view of the above-described embodiments of the present invention, various changes and modifications can be made by those skilled in the art without departing from the scope of the invention. The scope of the present invention is not limited to the specification, and is defined by the appended claims.

## Claims

1. A light source coupling structure for vehicle lights, comprising:
an upper reflection portion (2), wherein an incident cavity is provided in the upper reflection portion (2), a light source (4); and
a lower reflection portion (3), wherein the lower reflection portion (3) is arranged below the upper reflection portion (2) and the lower reflection portion (3) is connected to the upper reflection portion (2); wherein
a guide line of the upper reflection portion (2) and a guide line of the lower reflection portion (3) are each a parabola, to convert light rays emitted from the light source (4) into parallel light rays for output;
the upper reflection portion (2) comprises a plurality of first V-shaped reflective surfaces (21) arranged in sequence along a circumferential direction of the upper reflection portion (2), and the plurality of first V-shaped reflective surfaces (21) each comprise two surfaces inclined relative to each other, so that the light rays emitted from the light source (4) and received by the plurality of first V-shaped reflective surfaces (21) satisfy a total reflection condition, and upon incidence on the plurality of first V-shaped reflective surfaces (21), the light rays emitted from the light source (4) are converted into the parallel light rays for output;
the plurality of first V-shaped reflective surfaces (21) each comprise a first surface (211) and a second surface (212); and
an angle between the first surface (211) and the second surface (212) ranges from 80° to 100°, and an angle between adjacent surfaces of every two adjacent ones of the plurality of first V-shaped reflective surfaces (21) ranges from 80° to 100°; **characterized in that** the incident cavity is configured to accommodate the light source (4), wherein an incident surface (1) is provided in the incident cavity, wherein the incident surface (1) is a semi-circular curved surface, and wherein the incident surface (1) is located below the light source (4).

2. The light source coupling structure according to claim 1, **characterized in that** the upper reflection portion (2) is configured as an arc shape along the circumferential direction of the upper reflection portion (2).

3. The light source coupling structure according to claim 1, **characterized in that** the lower reflection portion (3) is configured as an arc shape along a circumferential direction of the lower reflection portion (3).

4. The light source coupling structure according to claim 1, **characterized in that** the first surface (211) is configured to totally reflect part of received light rays to the second surface (212) so that reflected light rays are converted by the second surface (212) into the parallel light rays for output, and the second surface (212) is configured to totally reflect part of received light rays to the first surface (211) so that reflected light rays are converted by the first surface (211) into the parallel light rays for output.

5. The light source coupling structure according to claim 1, **characterized in that** the lower reflection portion (3) is a smooth curved surface.

6. The light source coupling structure according to claim 1, **characterized in that** the lower reflection portion (3) comprises a plurality of second V-shaped reflective surfaces arranged in sequence along a circumferential direction of the lower reflection portion (3).

7. The light source coupling structure according to claim 6, **characterized in that** an angle between two surfaces of each of the plurality of second V-shaped reflective surfaces ranges from 80° to 100°, and an angle between adjacent surfaces of every two adjacent ones of the plurality of second V-shaped reflective surfaces ranges from 80° to 100°.

8. The light source coupling structure according to claim 1, **characterized in that** the upper reflection portion (2) and the lower reflection portion (3) are made of poly(methyl methacrylate) (PMMA) or polycarbonate (PC).

## Patentansprüche

1. Lichtquellenkopplungsstruktur für Kraftfahrzeugleuchten, umfassend:
einen oberen Reflexionsabschnitt (2), wobei in dem oberen Reflexionsabschnitt (2) ein Einfallhohlraum vorgesehen ist, eine Lichtquelle (4), und
einen unteren Reflexionsabschnitt (3), wobei der untere Reflexionsabschnitt (3) unterhalb des oberen Reflexionsabschnitts (2) angeordnet ist und der untere Reflexionsabschnitt (3) mit dem oberen Reflexionsabschnitt (2) verbunden ist, wobei
eine Leitkurve des oberen Reflexionsabschnitts (2) sowie eine Leitkurve des unteren Reflexionsabschnitts (3) jeweils eine Parabel sind, um die von der Lichtquelle (4) emittierten Lichtstrahlen in parallele Lichtstrahlen zur Abgabe umzuwandeln,
wobei der obere Reflexionsabschnitt (2) mehrere erste V-förmige Reflexionsflächen (21) umfasst, die nacheinander entlang einer Umfangsrichtung des oberen Reflexionsabschnitts (2) angeordnet sind, und wobei die mehreren ersten V-förmigen Reflexionsflächen (21) jeweils zwei zueinander geneigte Flächen umfassen, so dass die von der Lichtquelle (4) emittierten und von den mehreren ersten V-förmigen Reflexionsflächen (21) empfangenen Lichtstrahlen eine Totalreflexionsbedingung erfüllen und die von der Lichtquelle (4) emittierten Lichtstrahlen beim Auftreffen auf die mehreren ersten V-förmigen Reflexionsflächen (21) in die parallelen Lichtstrahlen zur Abgabe umgewandelt werden,
wobei die mehreren ersten V-förmigen Reflexionsflächen (21) jeweils eine erste Fläche (211) und eine zweite Fläche (212) umfassen, und wobei
ein Winkel zwischen der ersten Fläche (211) und der zweiten Fläche (212) im Bereich von 80° bis 100° liegt und ein Winkel zwischen benachbarten Flächen von jeweils zwei benachbarten der mehreren ersten V-förmigen Reflexionsflächen (21) im Bereich von 80° bis 100° liegt, **dadurch gekennzeichnet, dass** der Einfallhohlraum dazu ausgebildet ist, die Lichtquelle (4) aufzunehmen, wobei in dem Einfallhohlraum eine Einfallfläche (1) vorgesehen ist, wobei die Einfallfläche (1) eine halbkreisförmig gekrümmte Fläche ist, und wobei sich die Einfallfläche (1) unterhalb der Lichtquelle (4) befindet.

2. Lichtquellenkopplungsstruktur nach Anspruch 1, **dadurch gekennzeichnet, dass** der obere Reflexionsabschnitt (2) entlang der Umfangsrichtung des oberen Reflexionsabschnitts (2) kreisbogenförmig ausgebildet ist.

3. Lichtquellenkopplungsstruktur nach Anspruch 1, **dadurch gekennzeichnet, dass** der untere Reflexionsabschnitt (3) entlang der Umfangsrichtung des unteren Reflexionsabschnitts (3) kreisbogenförmig ausgebildet ist.

4. Lichtquellenkopplungsstruktur nach Anspruch 1, **dadurch gekennzeichnet, dass** die erste Fläche (211) dazu ausgebildet ist, einen Teil der empfangenen Lichtstrahlen zur zweiten Fläche (212) hin total zu reflektieren, sodass die reflektierten Lichtstrahlen an der zweiten Fläche (212) in die parallelen Lichtstrahlen zur Abgabe umgewandelt werden, und dass die zweite Fläche (212) dazu ausgebildet ist, einen Teil der empfangenen Lichtstrahlen zur ersten Fläche (211) hin total zu reflektieren, sodass die reflektierten Lichtstrahlen an der ersten Fläche (211) in die parallelen Lichtstrahlen zur Abgabe umgewandelt werden.

5. Lichtquellenkopplungsstruktur nach Anspruch 1, **dadurch gekennzeichnet, dass** der untere Reflexionsabschnitt (3) eine glatte gekrümmte Fläche ist.

6. Lichtquellenkopplungsstruktur nach Anspruch 1, **dadurch gekennzeichnet, dass** der untere Reflexionsabschnitt (3) mehrere zweite V-förmige Reflexionsflächen umfasst, die nacheinander entlang der Umfangsrichtung des unteren Reflexionsabschnitts (3) angeordnet sind.

7. Lichtquellenkopplungsstruktur nach Anspruch 6, **dadurch gekennzeichnet, dass** ein Winkel zwischen zwei Flächen jeder der mehreren zweiten V-förmigen Reflexionsflächen im Bereich von 80° bis 100° liegt, und ein Winkel zwischen benachbarten Flächen von jeweils zwei benachbarten der mehreren zweiten V-förmigen Reflexionsflächen im Bereich von 80° bis 100° liegt.

8. Lichtquellenkopplungsstruktur nach Anspruch 1, **dadurch gekennzeichnet, dass** der obere Reflexionsabschnitt (2) und der untere Reflexionsabschnitt (3) aus Polymethylmethacrylat (PMMA) oder Polycarbonat (PC) bestehen.

## Revendications

1. Structure d'accouplement de source de lumière pour feux de véhicule, comprenant :
une portion de réflexion supérieure (2), dans laquelle une cavité d'incidence est prévue dans la portion de réflexion supérieure (2), une source de lumière (4) ; et
une portion de réflexion inférieure (3), dans laquelle la portion de réflexion inférieure (3) est disposée sous la portion de réflexion supérieure (2) et la portion de réflexion inférieure (3) est connectée à la portion de réflexion supérieure (2) ; dans laquelle
une ligne de guidage de la portion de réflexion supérieure (2) et une ligne de guidage de la portion de réflexion inférieure (3) sont chacune une parabole, pour convertir des rayons de lumière émis par la source de lumière (4) en rayons de lumière parallèles pour la sortie ;
la portion de réflexion supérieure (2) comprend une pluralité de premières surfaces réfléchissantes en forme de V (21) disposées en séquence dans une direction circonférentielle de la portion de réflexion supérieure (2), et la pluralité de premières surfaces réfléchissantes en forme de V (21) comprennent chacune deux surfaces inclinées l' une par rapport à l' autre, de sorte que les rayons de lumière émis par la source de lumière (4) et reçus par la pluralité de premières surfaces réfléchissantes en forme de V (21) satisfont à une condition de réflexion totale, et lors d' une incidence sur la pluralité de premières surfaces réfléchissantes en forme de V (21), les rayons de lumière émis par la source de lumière (4) sont convertis en rayons de lumière parallèles pour la sortie ;
la pluralité de premières surfaces réfléchissantes en forme de V (21) comprennent chacune une première surface (211) et une seconde surface (212) ; et
un angle formé entre la première surface (211) et la seconde surface (212) varie de 80° à 100°, et un angle formé entre des surfaces adjacentes de chaque deux de la pluralité de premières surfaces réfléchissantes en forme de V (21) varie de 80° à 100° ; **caractérisée en ce que** la cavité d' incidence est configurée pour accueillir la source de lumière (4), dans laquelle une surface d' incidence (1) est prévue dans la cavité d' incidence, dans laquelle la surface d' incidence (1) est une surface courbe semi-circulaire, et dans laquelle la surface d' incidence (1) est située sous la source de lumière (4).

2. Structure d'accouplement de source de lumière pour feux de véhicule selon la revendication 1, **caractérisée en ce que** la portion de réflexion supérieure (2) est configurée sous forme d'arc dans la direction circonférentielle de la portion de réflexion supérieure (2).

3. Structure d'accouplement de source de lumière pour feux de véhicule selon la revendication 1, **caractérisée en ce que** la portion de réflexion inférieure (3) est configurée sous forme d'arc dans une direction circonférentielle de la portion de réflexion inférieure (3).

4. Structure d'accouplement de source de lumière pour feux de véhicule selon la revendication 1, **caractérisée en ce que** la première surface (211) est configurée pour réfléchir totalement une partie des rayons de lumière reçus vers la seconde surface (212) de sorte que les rayons de lumière réfléchis soient convertis par la seconde surface (212) en rayons de lumière parallèles pour la sortie, et la seconde surface (212) est configurée pour réfléchir totalement une partie des rayons de lumière reçus vers la première surface (211) de sorte que les rayons de lumière réfléchis soient convertis par la première surface (211) en rayons de lumière parallèles pour la sortie.

5. Structure d'accouplement de source de lumière pour feux de véhicule selon la revendication 1, **caractérisée en ce que** la portion réfléchissante inférieure (3) est une surface courbe lisse.

6. Structure d'accouplement de source de lumière pour feux de véhicule selon la revendication 1, **caractérisée en ce que** la portion de réflexion inférieure (3) comprend une pluralité de secondes surfaces réfléchissantes en forme de V disposées en séquence dans une direction circonférentielle de la portion de réflexion inférieure (3).

7. Structure d'accouplement de source de lumière pour feux de véhicule selon la revendication 6, **caractérisée en ce qu'**un angle formé entre deux surfaces de chacune de la pluralité de secondes surfaces réfléchissantes en forme de V varie de 80° à 100°, et un angle formé entre des surfaces adjacentes de chaque deux de la pluralité de secondes surfaces réfléchissantes en forme de V varie de 80° à 100°.

8. Structure d'accouplement de source de lumière pour feux de véhicule selon la revendication 1, **caractérisée en ce que** la portion de réflexion supérieure (2) et la portion de réflexion inférieure (3) sont en poly(méthacrylate de méthyle) (PMMA) ou polycarbonate (PC).
